## Europäisches Patentamt
## European Patent Office
## Office européen des brevets

(19)

(11) Veröffentlichungsnummer: **0 103 716**
**B1**

(12) # EUROPÄISCHE PATENTSCHRIFT

(45) Veröffentlichungstag der Patentschrift:
08.06.88

(21) Anmeldenummer: 83107592.4

(22) Anmeldetag: 02.08.83

(51) Int. Cl.⁴: **B 60 T 13/68,** B 60 T 17/18,
B 60 T 13/58, B 60 T 8/18,
B 60 T 13/26, B 60 T 13/38

(54) **Mehrkreis-Bremsanlage.**

(30) Priorität: 20.08.82 DE 3230971

(43) Veröffentlichungstag der Anmeldung:
28.03.84 Patentblatt 84/13

(45) Bekanntmachung des Hinweises auf die Patenterteilung:
08.06.88 Patentblatt 88/23

(84) Benannte Vertragsstaaten:
DE FR GB IT SE

(56) Entgegenhaltungen:
EP-A-0 079 543
EP-A-0 068 911
DE-A-2 043 840
DE-A-2 937 657
DE-A-3 009 273
DE-A-3 027 745
DE-A-3 149 110
DE-B-1 116 263
GB-A-2 058 972
US-A-3 890 013

(73) Patentinhaber: ROBERT BOSCH GMBH, Postfach
50, D-7000 Stuttgart 1 (DE)
Patentinhaber: SAAB- SCANIA AKTIEBOLAG, S-151
87 Södertälje (SE)

(72) Erfinder: Müller, Egbert, Dr.- Ing., Schillerstrasse
12, D-7147 Hochdorf (DE)
Erfinder: Grauel, Ingolf, Dipl.- Ing., Lessingstrasse
6, D-7143 Vaihingen/Enz (DE)
Erfinder: Stumpe, Werner, Dipl.- Ing.,
Goerdelerstrasse 10, D-7014 Kornwestheim (DE)
Erfinder: Maurer, Franz, Dr.- Ing., Liegnitzer
Strasse 27, D-7141 Schwieberdingen (DE)
Erfinder: Samuelsson, Hakan, Dipl.- Ing.,
Plöjarvägen 32, S-150 23 Enhörna (SE)
Erfinder: Thoms, Eric, Stockenströsväg 34 B, S-150
31 Akers Styckebruk (SE)

EP 0 103 716 B1

**Beschreibung**

Die Erfindung geht aus von einer Mehrkreis-Bremsanlage nach der Gattung des Hauptanspruchs. Eine derartige Bremsanlage gehört zum Stand der Technik gemäß Art. 54 (3) EPÜ (siehe EP-A-0 088 911, veröffentlicht am 21.9.1983).

Bei dieser früher angemeldeten Mehrkreis-Bremsanlage ist dem Mehrkreis-Bremswertgeber für jeden Bremskreis ein Drucksteuerventil nachgeordnet, das sowohl über das Druckmittel als auch über die Elektrik ansteuerbar ist. Jedes Drucksteuerventil hat deshalb ein Magnetventil und einen Druckmittelzylinder in seinem Ansteuerteil. Auf diese Weise ist die bekannte Bremsanlage aber vielteilig und teuer.

Der Erfindung liegt die Aufgabe zugrunde, die Anlage der eingangs genannten Art weiter zu vereinfachen und zu verbilligen, wobei die Sicherheit des Bremsens in besonders weitgehender Weise gewährleistet sein soll.

Diese Aufgabe wird gemäß der Erfindung bei einer gattungsgemäßen Mehrkreis-Bremsanlage durch die kennzeichnenden Merkmale des Patentanspruchs gelöst.

Gemäß den Merkmalen der Unteransprüche ist eine vorteilhafte Weiterbildung des Erfindungsgegenstandes durch Berücksichtigung der erzeugbaren Bremskraft zu erreichen, indem ein rein druckmittelbetätigter Bremskreis der ist, der mindestens die Restbremswirkung erbringt, und es ist auch von Vorteil, daß in eine vom Bremswertgeber zu den Drucksteuerventilen führende Steuerleitung ein lastabhängiges und/oder blockierschutzabhängiges Schaltglied eingesetzt ist, wodurch Horizontal- und/oder Vertikalkräfte am Fahrzeug beim Bremsen berücksichtigt werden können.

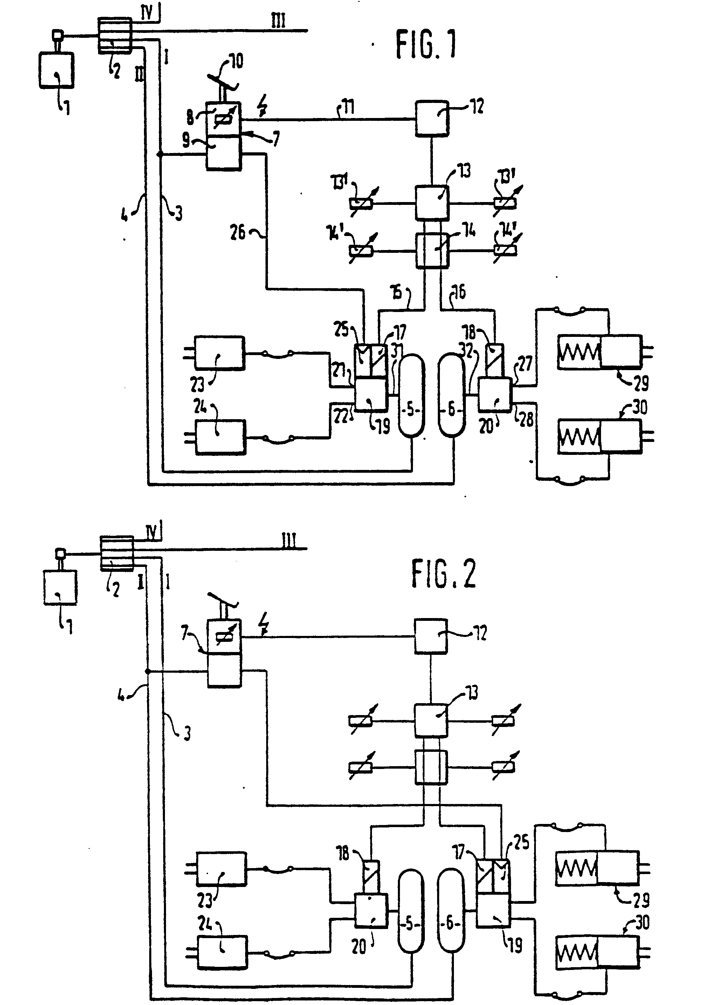

Zwei Ausführungsbeispiele der Erfindung sind in der Zeichnung dargestellt und in der nachfolgenden Beschreibung näher erläutert. Es zeigen: Figur 1 eine Bremsanlage mit druckluftelektrisch ansteuerbarer Vorderachs-Bremse und Figur 2 eine Bremsanlage mit druckluftelektrischansteuerbarer Hinterachs-Bremse.

Eine Mehrkreis-Bremsanlage hat auf einem Zugwagen einen Kompressor 1 mit Druckregler und ein diesem nachgeschaltetes Vierkreis-Schutzventil 2, an das zwei Betriebsbremskreise I und II angeschlossen sind. Zu diesen Betriebsbremskreisen I und II gehören zwei Versorgungsleitungen 3 und 4, an die zwei Vorratsbehälter 5 und 6 als Druckmittelspeicher angeschlossen sind.

Ebenfalls auf dem Zugwagen ist ein Zweikreis-Bremswertgeber 7 angeordnet, der einen elektrischen Stromgeber 8 und ein Ventilglied 9 aufweist, die beide gleichzeitig von einem Fahrer über ein Pedal 10 betätigbar sind.

Der elektrische Stromgeber 8 ist über eine elektrische Leitung 11 an ein elektronisches Steuergerät 12 angeschlossen, dem ein lastabhängiges Schaltglied 13 mit Lastsensoren 13' und ein blockierschutzabhängiges Schaltglied 14 mit Raddrehzahlsensoren 14' nachgeordnet sind. Dabei ist die Einrichtung so getroffen, daß das lastabhängige Schaltglied mehrkanalig sein kann und daß die Blockierschutzüberwachung mehrkanalig ausgebildet ist, indem von dem Schaltglied 14 getrennte Leitungen 15 und 16 zu Elektromagneten 17 und 18 geführt sind. Jeder Magnet 17 bzw. 18 sitzt an einem Drucksteuerventil 19 bzw. 20 und dient zu dessen Betätigung. Anstelle eines Betätigungsmagneten können auch Gruppen von Magneten verwendet werden.

Das Drucksteuerventil 19 ist zur Überwachung der Vorderachsbremsen bestimmt. Es hat zu diesem Zweck zwei Ausgänge 21 und 22, an die je ein Vorderachsbremszylinder 23 und 24 angeschlossen ist. Außerdem hat es parallel neben dem Elektromagneten 17 eine Kammer 25, über die eine nicht näher dargestellte Druckluftverknüpfung zur Vorderachse möglich ist. Die Kammer 25 ist über eine Druckluft-Steuerleitung 26 an das Ventilglied 9 des Bremswertgebers 7 angeschlossen.

Das andere Drucksteuerventil 20 ist einzig über den Magneten 18 betätigbar. Es ist zur Überwachung der Hinterachsbremsen bestimmt und hat zu diesem Zweck zwei Ausgange 27 und 28, an die je ein Hinterachsbremszylinder 29 und 30 angeschlossen ist. Die Hinterachsbremszylinder 29 und 30 sind als kombiniert Einkammer-Federspeicher-Bremszylinder ausgebildet, was aber im Zusammenhang mit der Erfindung ohne Bedeutung ist.

Jedes Drucksteuerventil 9 bzw. 20 ist über eine kurze Leitung 31 bzw. 32 unmittelbar an einen der beiden Vorratsbehälter 5 bzw. 6 angeschlossen.

Die Figur 2 zeigt eine weitgehend gleiche Mehrkreis-Bremsanlage wie die Figur 1; entsprechende Teile tragen deshalb die gleichen Bezugszahlen. Jedoch sind die beiden Drucksteuerventile 19 und 20 miteinander vertauscht, so daß bei der Bauart nach der Figur 2 das Drucksteuerventil 20 der Vorderachsbremszylinder 23 und 24 lediglich elektrisch und das Drucksteuerventil 19 der Hinterachsbremszylinder 29 und 30 elektrisch und pneumatisch ansteuerbar sind.

Wirkungsweise

Beim Betätigen des Bemswertgebers 7 werden sowohl der elektrische Stromgeber 8 als auch das Ventilglied 9 umgeschaltet. Der Strom erreicht über die Leitung 11 das elektronische Steuergerät 12 und wird dort umgeformt, dann werden vom lastabhängigen Schaltglied 13 ein Lastwert und vom blockierschutzabhängigen Schaltglied 14 ein Bremswert aufgeschaltet, und das jeweilige Produkt wird über die Leitungen 15 und 16 den Elektromagneten 17 und 18 zugeleitet. Diese sind abhängig von den jeweiligen Zeiten und Stromstärken durchschaltbar. Die Elektromagneten 17 und 18 schalten die Drucksteuerventile um, und Vorratsluft aus den Vorratsbehältern 5 und 6 wird kontrolliert auf kurzem Wege in die Bremszylinder 23, 24, 29, 30 eingesteuert. Es wird mit zugemessenen Kräften gebremst.

Der Strombetätigung nachhinkend gelangt vom Ventilglied 9 Druckluft über die Steuerleitung 26 zur Kammer 25 des Drucksteuerventils 19. Wenn das Drucksteuerventil 19 die Bremszylinder 23, 24 bereits mit Druckluft versorgt hat, bleibt diese Betätigung im Hinblick auf die Bremskraft unwirksam.

Fällt jedoch die Elektrik aus, wird mit der Beaufschlagung der Kammer 25 in dem zugeordneten Bremskreis ein weiteres Bremsen ermöglicht, so daß das Fahrzeug zum Stillstand gebracht werden kann. Durch die Entnahme der steuernden Druckluft und der Arbeitsenergie (Vorratsbehälter 5) aus dem gleichen Bremskreis ist eine zuverlässig getrennte Zweikreisigkeit der Anlage gewährleistet. Die von den Gliedern 12, 13 und 14 erstellte elektronische Regelung wird dabei sowohl lastabhängig als auch von der Arbeit einer Blockierschutzeinrichtung überwacht. Die Sensoren 13' und 14' können bei ihrer Arbeit eine oder mehrere Achsen oder auch eins oder mehrere Räder erfassen. Dazu kommt, daß die Drucksteuerventile 19 und 20 ein- oder mehrkanalig ausgebildet sein können und daß ihre Zuordnung achs- oder radweise durchgeführt sein kann.

## Patentansprüche

1. Mehrkreis-Bremsanlage, insbesondere für Kraftfahrzeuge, mit einem Mehrkreis-Bremswertgeber (7), der mindestens einen mit Druckmittel ansteuerbaren Bremskreis (I) und einen elektrisch ansteuerbaren Bremskreis (II) zur Bremsbetätigung überwacht, und mit dem Bremswertgeber (7) anchgeschalteten Bremszylindern (23, 24, 29, 30), wobei in einem (I) der Bremskreise (I, II) ein sowohl über das Druckmittel als auch über die Elektrik ansteuerbares erstes Drucksteuerventil (19) vorgesehen ist, dem ein Druckmittelspeicher (5) zur Versorgung mit Steuerenergie zugeordnet ist und wobei in eine von dem Bremswertgeber (7) sowohl zu dem genannten ersten Drucksteuerventil (19) als auch zu einem weiteren, dem anderen Bremskreis (II) zugeordneten zweiten Drucksteuerventil (20) führende, elektrische Steuerleitung (11, 15, 16) mindestens ein Schaltglied (12, 13, 14) eingesetzt ist, das von den Fahrzustand abtastenden Sensoren (13', 14') beeinflußbar ist, dadurch gekennzeichnet, daß das in dem anderen (II) der beiden Bremskreise (I, II) vorgesehene zweite Drucksteuerventil (20) ausschließlich elektrisch ansteuerbar ist.

2. Mehrkreis-Bremsanalage nach Anspruch 1, dadurch gekennzeichnet, daß in die elektrische Steuerleitung (11, 15, 16) ein lastabhängiges Schaltglied (13) eingesetzt ist.

3. Mehrkreis-Bremsanalage nach Anspruch 1, dadurch gekennzeichnet, daß in die elektrische Steuerleitung (11, 15, 16) ein blockierschutzabhängiges Schaltglied (14) eingesetzt ist.

4. Mehrkreis-Bremsanalage nach einem der Ansprüche 1 bis 3, dadurch gekennzeichnet, daß jedem Fahrzeugrad bzw. jedem Bremszylinder (23, 24, 29, 30) ein Drucksteuerventil (19, 20) zugeordnet ist.

5. Mehrkreis-Bremsanlage nach einem der Ansprüche 1 bis 4 mit Bremskreisen jeweils unterschiedlicher Kreisufteilung, z. B. Parallel-Diagonal-, Doppel-Anordnung, oder teilweiser Doppel-Anordnung, dadurch gekennzeichnet, daß der mit Druckmittel angesteuerte Bremskreis (I) so ausgelegt ist, daß mit ihm allein eine noch ausreichende Bremskraft erzeugbar ist.

## Claims

1. Multiple-circuit brake system, especially for motor vehicles, with a multiple-circuit brake-power transmitter (7) which monitors at least one brake circuit (I) controllable by a pressure medium and an electrically controllable brake circuit (II) for brake actuation, and with brake cylinders (23, 24, 29, 30) following the brake-power transmitter (7), in one (I) of the brake circuits (I, II) there being a first pressure-control valve (19) which can be controlled both via the pressure medium and via the electrical system and to which is assigned a pressure-medium reservoir (5) for supplying control energy, and there being inserted into an electrical control line (11, 15, 16), leading from the brake-power transmitter (7) both to the said first pressure-control valve (19) and to a further second pressure-control valve (20) assigned to the other brake circuit (II), at least one switch element (12, 13, 14) which can be influenced by sensors (13', 14') sensing the driving state, characterized in that the second pressure-control valve (20) provided in the other (II) of the two brake circuits (I, II) can be actuated purely electrically.

2. Multiple-circuit brake system according to Claim 1, characterized in that a load-dependent switch element (13) is inserted into the electrical control line (11, 15, 16).

3. Multiple-circuit brake system according to Claim 1, characterized in that an antilock-dependent switch element (14) is inserted into the electrical control line (11, 15, 16).

4. Multiple-circuit brake system according to one of Claims 1 to 3, characterized in that a pressure-control valve (19, 20) is assigned to each vehicle wheel or to each brake cylinder (23, 24, 29, 30).

5. Multiple-circuit brake system according to one of Claims 1 to 4, with brake circuits having differing circuit arrangements, for example a parallel, a diagonal, a double or a partial double arrangement, characterized in that the brake circuit (I) controlled by a pressure medium is designed so that a still sufficient brake force can be generated by it alone.

## Revendications

1. Installation de freinage multi-circuits, en particulier pour véhicules, avec un transmetteur de valeur de freinage (7), qui surveille au moins un circuit de freinage (1) commandable avec un fluide sous pression et un circuit de freinage (II) commandable électriquement, pour l'actionnement du freinage et avec des cylindres de freinage (23, 24, 29, 30) branchés en aval du transmetteur de valeur de freinage (7), dans lequel à cette occasion est prévue une première soupape de commande de pression (19) dans l'un (I) des circuits (I, II), commandable aussi bien par le fluide sous pression que par l'électricité, à laquelle est affecté un accumulateur de fluide sous pression (5), pour l'alimentation en energie de commande et dans lequel est mis en oeuvre au moins un organe de branchement (12, 13, 14) dans une liaison de commande électrique (11, 15, 16), conduisant depuis le transmetteur de valeur de freinage (7), qu'aussi bien à la première soupape de commande de pression (9) déjà nommée, qu'également à une autre soupape de commande de pression (20) qui est affectée à l'autre circuit de freinage (II), qui est influençable par des capteurs (13', 14') captant l'état de roulement, caractérisé en ce que la soupape de commande de pression (20) qui est prévue dans l'autre (II) des deux circuits de freinage (I, II) est commandable de manière exclusivement électriquement.

2. Installation de freinage en multi-circuits selon la revendication 1, caractérisée en ce qu'un organe de branchement (13) dépendant de la charge est mis en oeuvre dans la conduite de commande électrique (11, 15, 16).

3. Installation de freinage en multi-circuits selon la revendication 1, caractérisée en ce qu'un organe de branchement (14) dépendant de la protection anti-blocage est mis en oeuvre dans le circuit de commande électrique (11, 15, 16).

4. Installation de freinage en multi-circuits, selon une des revendications 1 à 3, caractérisée en ce qu'une soupape de commande de pression (19, 20) est affectée à chaque degré de véhicule, respectivement chaque cylindre de frein (23, 24, 29, 30).

5. Installation de freinage en multi-circuits selon une des revendications 1 à 4, avec des circuits de freinage possédant chaque fois des subdivisions de circuit différentes, par exemple en parallèle, en diagonale, en disposition double, ou bien en disposition partiellement double, caractérisée en ce que le circuit de freinage (I), commandé avec un fluide sous pression, est déterminé de telle sorte qu'une force de freinage encore suffisante en elle-même puisse être produite avec lui seul.

FIG.1

FIG.2